# EUROPEAN PATENT APPLICATION

(11) **EP 4 693 683 A1**
(43) Date of publication of application: **11.02.2026**
(21) Application number: 24927656.9
(22) Date of filing: 12.12.2024
(51) Int. Cl.: H01M 50/383, H01M 50/342, H01M 50/224, H01M 50/249

(54) **COVER ASSEMBLY OF BATTERY MODULE, BATTERY PACK, AND VEHICLE COMPRISING SAME**

(30) Priority: 10.06.2024 KR 20240075259
(71) Applicant: LG Energy Solution Ltd., Seoul 07335 (KR)
(72) Inventor: MIN, Jin Ki, Daejeon 34122 (KR); RHIM, So Eun, Daejeon 34122 (KR); KIM, Ha Eun, Daejeon 34122 (KR); PARK, Jong Wook, Daejeon 34122 (KR); JEON, Sang Yoon, Daejeon 34122 (KR); PANG, Yoo Seok, Daejeon 34122 (KR)
(74) Representative: BCKIP Part mbB
(86) International application number: PCT/KR2024/020285
(87) International publication number: WO 2025/258764

(57) **Abstract**

Disclosed is a cover assembly for a battery module, a battery pack, and a vehicle including the same, the cover assembly including a cover frame coupled to one opened side of a battery module casing in which a plurality of battery cells is embedded, the cover frame being configured to close the battery module casing and having a plurality of venting holes, and a flame-retardant cover disposed between the cover frame and the battery cells, coupled to one surface of the cover frame, and having a plurality of protruding portions inserted into the venting holes of the cover frame.

## Description

### [Technical Field]

The present disclosure relates to a cover assembly for a battery module, the cover assembly being capable of improving safety by smoothly discharging gas or flame by preventing a cover of a battery module from collapsing in an abnormal battery situation, a battery pack, and a vehicle including the same.

### [Background Art]

Recently, a technology for reducing carbon has been actively developed to solve environmental issues such as abnormal atmospheric temperatures. In order to reduce carbon, energy needs to be produced by environmentally friendly methods instead of fossil fuel, the produced energy needs to be stored in the form of electrical energy, and the stored electrical energy needs to be used for vehicles, various types of industrial sites, and homes.

In order to utilize electrical energy while reducing carbon, it is essential to use batteries capable of storing and retrieving electrical energy. Therefore, it is essential to ensure the performance of the battery to sufficiently store electrical energy and use the electrical energy without discomfort.

The battery mainly uses a redox reaction of metal ions. The battery uses metal ions with a high density to improve a capacity of the battery and charging and discharging performance and efficiency of the battery. Many studies are also being conducted on materials, which constitute electrolytes, and on solid electrolytes and the like. However, there is a general problem in that stability deteriorates as the performance of the battery is developed.

Batteries used in vehicles, industries, or homes are manufactured in physical units called packs. The battery pack is configured such that a plurality of battery cells is embedded in a battery casing and sealed. The battery pack serves to prevent fire from spreading to the outside even in the event of an accident such as thermal runaway in the battery and protect the battery cells therein so that the battery cells are not degraded by being affected by an external environment, or the battery cells are not physically damaged by an external environment.

In the battery pack, the plurality of battery cells is embedded in an intermediate form of a module or an assembly (cell module assembly (CMA)). The battery module or the assembly is configured by assembling the plurality of battery cells into one module or assembly. A plurality of modules or assemblies is fastened into a pack casing, such that the battery pack is completely manufactured. When the battery is maintained, the maintenance may be performed on the unit of the module or the assembly, which facilitates the maintenance.

The battery module or assembly refers to a battery assembly configured by organizing the plurality of battery cells and is manufactured in a shape in which the battery cells are connected to the module casing or the like. In the event of a fire in a particular battery cell in the battery assembly, there is a risk that a structure of the battery assembly collapses and the fire spreads to the adjacent battery assembly and the battery cell present in the battery assembly. There is a need to reduce the propagation of the fire between the battery modules in the battery pack by preventing or maximally delaying the collapse of the structure of the battery assembly.

A plurality of unit battery cells, which constitutes the module or the assembly, includes a positive electrode, a negative electrode, and an electrolyte. Because the battery cell generates heat when the battery cell is charged and discharged, it is necessary to effectively dissipate heat from the battery cell. In addition, the battery module, the assembly, or the battery pack needs to be designed to efficiently dissipate heat to prevent a safety accident.

Meanwhile, the battery may be degraded when the battery is subjected to manufacturing errors, when the battery is excessively charged or discharged, or when the battery ages. Further, when the battery continues to deteriorate, a fire may eventually occur. Therefore, it is necessary to prepare in advance to prevent a fire from occurring in the battery. To this end, it is important to consistently sense a state of the battery and recognize and cope with, in advance, a problem when the problem occurs. In the event of an unexpected problem, it is necessary to minimize damage.

The foregoing explained as the background is intended merely to aid in the understanding of the background of the present disclosure, and is not intended to mean that the present disclosure falls within the purview of the related art that is already known to those skilled in the art.

### [Disclosure]

### [Technical Problem]

The present disclosure has been made in an effort to solve the above-mentioned problem, and an object of the present disclosure is to provide a cover assembly for a battery module, a battery pack, and a vehicle including the same, in which in the event of a fire in a particular battery module or battery cell, a flame-retardant cover is coupled to one side of a module cover frame to prevent the module cover frame from collapsing under a high-temperature or high-pressure environment caused by the fire, thereby preventing or maximally delaying propagation of gas or flame to an adjacent battery module or battery cell.

Technical problems to be solved by the present disclosure are not limited to the above-mentioned technical problems, and other technical problems, which are not mentioned above, may be clearly understood from the following descriptions by those skilled in the art to which the present disclosure pertains.

### [Technical Solution]

In order to achieve the above-mentioned object, a cover assembly for a battery module according to the present disclosure includes: a cover frame coupled to one opened side of a battery module casing in which a plurality of battery cells is embedded, the cover frame being configured to close the battery module casing and having a plurality of venting holes; and a flame-retardant cover disposed between the cover frame and the battery cells, coupled to one surface of the cover frame, and having a plurality of protruding portions inserted into the venting holes of the cover frame.

In the case of the cover assembly for the battery module according to the present disclosure, the protruding portion of the flame-retardant cover may be formed at a position corresponding to the venting hole of the cover frame.

In the case of the cover assembly for the battery module according to the present disclosure, the protruding portion of the flame-retardant cover may be equal in size to or smaller in size than the venting hole of the cover frame, such that the protruding portion may be inserted into the venting hole.

In the case of the cover assembly for the battery module according to the present disclosure, the flame-retardant cover may be formed by coupling a woven fabric and a flame retardancy material.

In the case of the cover assembly for the battery module according to the present disclosure, a temporarily cut line may be formed on the protruding portion of the flame-retardant cover along a shape of the venting hole of the cover frame.

In the case of the cover assembly for the battery module according to the present disclosure, the protruding portion of the flame-retardant cover may be opened as the temporarily cut line is cut when gas or flame occurs in a battery module, such that a through-hole may be formed.

In the case of the cover assembly for the battery module according to the present disclosure, the cover frame may be made of a metallic material.

In the case of the cover assembly for the battery module according to the present disclosure, a rim of the flame-retardant cover may be bent to surround a lateral surface of the cover frame.

In the case of the cover assembly for the battery module according to the present disclosure, a height of the protruding portion of the flame-retardant cover may correspond to a height of the cover frame.

In the case of the cover assembly for the battery module according to the present disclosure, a lateral surface of the protruding portion of the flame-retardant cover may be tightly attached to an inner peripheral surface of the venting hole of the cover frame.

In the case of the cover assembly for the battery module according to the present disclosure, an upper-end surface of the protruding portion of the flame-retardant cover may be disposed on the same plane as an upper surface of the cover frame in a state in which the flame-retardant cover is coupled to the cover frame.

In the case of the cover assembly for the battery module according to the present disclosure, the cover assembly may further include: a module cover configured to close one opened side of the battery module casing and cover the cover assembly.

In the case of the cover assembly for the battery module according to the present disclosure, the module cover may be made of a metallic material.

In the case of the cover assembly for the battery module according to the present disclosure, the module cover may have a fractured portion, and the protruding portion of the flame-retardant cover and the venting hole of the cover frame may be formed at positions corresponding to the fractured portion of the module cover.

In the case of the cover assembly for the battery module according to the present disclosure, an upper-end surface of the protruding portion of the flame-retardant cover may be in contact with a surface of the module cover directed toward the battery cell in a state in which the flame-retardant cover is coupled to the cover frame.

In the case of the cover assembly for the battery module according to the present disclosure, the venting hole may be positioned above the battery cell and disposed to at least partially overlap an upper end of the battery cell.

In the case of the cover assembly for the battery module according to the present disclosure, the adjacent battery cells may include a pair of battery cells, a compression pad may be disposed between the pair of battery cells, and the protruding portion of the flame-retardant cover may be disposed to at least partially overlap upper ends of the pair of battery cells based on a direction toward the compression pad.

A battery pack according to the present disclosure includes the above-mentioned cover assembly for a battery module.

A vehicle according to the present disclosure includes the above-mentioned battery pack.

### [Advantageous Effects]

According to the cover assembly for a battery module, the battery pack, and the vehicle including the same according to the present disclosure, the flame-retardant cover is coupled to one side of the module cover frame, such that it is possible to prevent a situation in which the cover frame of the battery module is melted or collapsed under a high-temperature or high-pressure environment created in the event of a fire in a particular battery module or battery cell. Therefore, it is possible to prevent or maximally delay propagation of gas or flame to the adjacent battery module or the adjacent battery cell.

The effects obtained by the present disclosure are not limited to the aforementioned effects, and other effects, which are not mentioned above, will be clearly understood by those skilled in the art from the following description.

### [Description of Drawings]

FIG. 1 is a view illustrating a cover assembly for a battery module according to an embodiment of the present disclosure.
FIG. 2 is a view illustrating a cross-section of the cover assembly for a battery module illustrated in FIG. 1.
FIG. 3 is an enlarged view of part A illustrated in FIG. 1.
FIG. 4 is a view illustrating a state in which a through-hole is formed by opening a protruding portion of a flame-retardant cover illustrated in FIG. 3.
FIG. 5 is a view illustrating a battery pack and a vehicle to which the cover assembly for a battery module according to the present disclosure is applied.

### [Mode for Invention]

In the description of the embodiments disclosed in the present specification, the specific descriptions of publicly known related technologies will be omitted when it is determined that the specific descriptions may obscure the subject matter of the embodiments disclosed in the present specification. In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

Singular expressions include plural expressions unless clearly described as different meanings in the context. In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof.

The suffixes "module", "unit", "part", and "portion" used to describe constituent elements in the following description are used together or interchangeably in order to facilitate the description, but the suffixes themselves do not have distinguishable meanings or functions. When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

Hereinafter, embodiments disclosed in the present specification will be described in detail with reference to the accompanying drawings. The same or similar constituent elements are assigned with the same reference numerals regardless of the reference numerals, and the repetitive description thereof will be omitted. A battery is installed in the form of a battery pack BP in a vehicle V or the like. A plurality of battery modules is embedded in one battery pack BP, and a plurality of battery cells 700 is stacked in the battery module. Because battery technologies are used in various fields, it is necessary to discuss safety technologies to prevent accidents occurring when the batteries are used.

Fires in the batteries are main accidents related to the batteries. The occurrence of fire and explosion in the battery module or the battery cell 700 refers to thermal runaway, and the transfer of thermal runaway to the adjacent battery module or the adjacent battery cell 700 refers to thermal propagation. The fire and explosion of the battery are caused by thermal runaway of the battery module or the battery cell 700, and the thermal runaway is caused by various factors such as over-charging or over-discharging of the battery module or the battery cell 700, high-temperature environments, mechanical defects, and internal short circuits. In the event of the thermal runaway, gas or flame caused by the thermal runaway rapidly propagates to the entire battery pack BP because the thermal propagation to the adjacent battery module or the battery cell 700 successively occurs. Therefore, there is a need to prevent or maximally delay the propagation of gas or flame to the adjacent battery module or the adjacent battery cell 700 in case that the thermal runaway occurs.

In the related art, when thermal runaway occurs in the battery module, in which the plurality of battery cells 700 is embedded, or occurs in the battery cells 700 stacked in the battery module, gas or flame is smoothly discharged through a venting hole 320 formed in a cover frame 300 that constitutes a module cover 200 of the battery module. However, there is a problem in that the cover frame 300 is collapsed or melted under a high-temperature or high-pressure environment caused by the thermal runaway, the thermal propagation of gas or flame to the adjacent battery module or the adjacent battery cell 700 eventually occurs frequently.

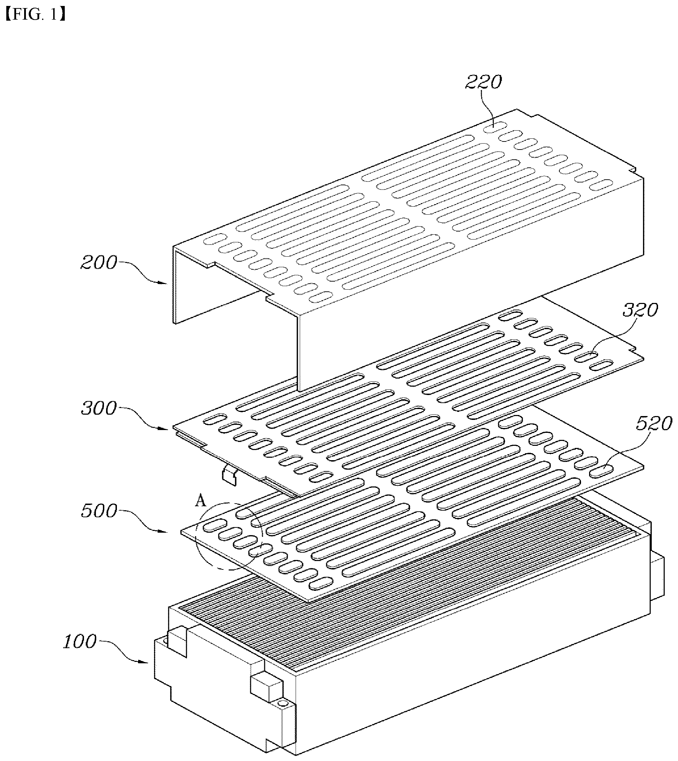

As illustrated in FIG. 1, the present disclosure proposes a cover assembly for a battery module, in which a flame-retardant cover 500 is coupled to one surface of the cover frame 300 that constitutes the module cover 200 of the battery module, which prevents a situation in which the cover frame 300 is melted or collapsed even under a high-temperature or high-pressure environment created when thermal runaway occurs in a particular battery module or battery cell 700, thereby preventing or delaying thermal propagation to the adjacent battery module or the adjacent battery cell 700.

Specifically, as illustrated in FIG. 1, the present disclosure relates to the cover assembly for a battery module, the cover assembly including the cover frame 300 coupled to one opened side of a battery module casing 100, in which the plurality of battery cells 700 is embedded, to close the battery module casing 100 and having a plurality of venting holes 320, and the flame-retardant cover 500 disposed between the cover frame 300 and the battery cells 700, coupled to one surface of the cover frame 300, and having a plurality of protruding portions 520 inserted into the venting holes 320 of the cover frame 300.

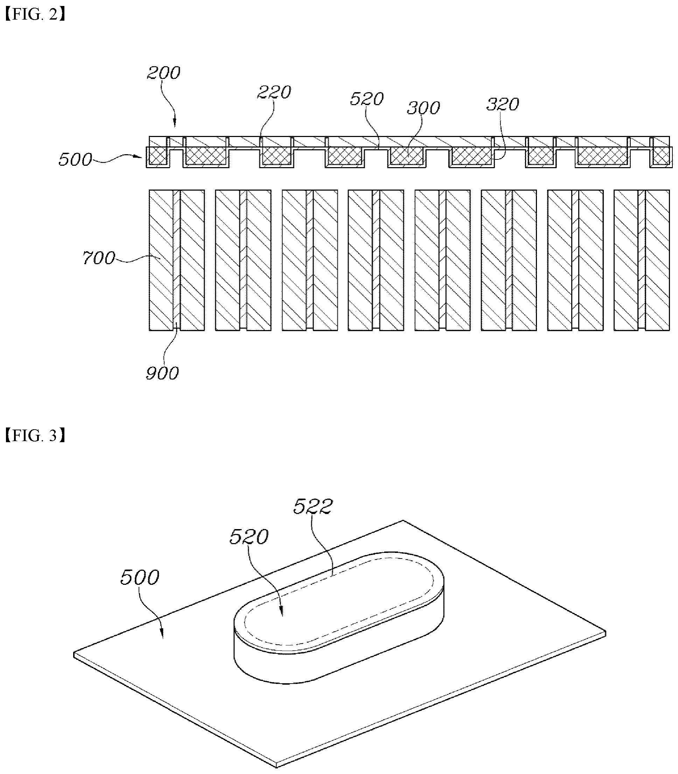

According to the present disclosure, as illustrated in FIG. 2, the protruding portions 520 of the flame-retardant cover 500 are inserted into the venting holes 320 of the cover frame 300, such that the flame-retardant cover 500 and the cover frame 300 are coupled. Therefore, even in the event of thermal runaway in the battery module or the battery cell 700, the flame-retardant cover 500 may reduce a risk that the cover frame 300 is melted or collapsed by a high temperature or high pressure. Therefore, it is possible to prevent or maximally delay propagation of gas or flame, which is generated by thermal runaway occurring in a particular battery module or battery cell 700, to the adjacent battery module or the adjacent battery cell 700.

Meanwhile, the battery module casing 100 in the present disclosure refers to a unit in which the battery cells 700 are stacked to configure the plurality of battery cells 700. Therefore, the battery module casing 100 includes an assembly with a frame or strap shape as well as the battery module with a casing or housing shape. In addition to the battery module or assembly shape, the battery module casing 100 refers to a stack made by binding a predetermined number of battery cells 700 and stacking the plurality of battery cells 700 in a casing or frame shape.

The protruding portions 520 are formed on the flame-retardant cover 500 coupled to one surface of the cover frame 300. As illustrated in FIG. 2, the protruding portions 520 of the flame-retardant cover 500 are formed at positions corresponding to the venting holes 320 of the cover frame 300. The protruding portion 520 is formed to be equal in size to or smaller in size than the venting hole 320 of the cover frame 300, such that the protruding portion 520 is inserted into the venting hole 320. The flame-retardant cover 500 may be disposed between the cover frame 300 and the battery cell 700 and prevent gas or flame, which is generated in the event of thermal runaway in the battery cell 700 positioned in the battery module casing 100, from directly affecting the cover frame 300, thereby preventing a situation in which the cover frame 300 is collapsed or melted even under a high-temperature or high-pressure environment created in the event of the thermal runaway.

The flame-retardant cover 500 may be manufactured only by a flame retardancy material or formed by coupling woven fabric and the flame retardancy material. In case that the woven fabric is included, the woven fabric serves as a support body, which improves rigidity and facilitates a forming or assembling process. However, the fibers in the form of woven fabric prevent the flame-retardant cover from being easily torn or fractured. The protruding portions 520 of the flame-retardant cover 500 are structured to be inserted into the venting holes 320 of the cover frame 300 and need to smoothly discharge gas or flame generated in the event of thermal runaway in the battery cell 700 or the battery module positioned at a lower end of the flame-retardant cover 500. Therefore, as illustrated in FIG. 3, a temporarily cut line 522 may be formed on the protruding portion 520 of the flame-retardant cover 500 along a shape of the venting hole 320 of the cover frame 300. Therefore, the flame-retardant cover 500 may maintain rigidity and durability by means of the woven fabric structure coupled to the cover frame 300, and the protruding portion 520 of the flame-retardant cover 500 has a structure assuredly opened by the temporarily cut line 522, thereby smoothly discharging gas or flame in the event of thermal runaway.

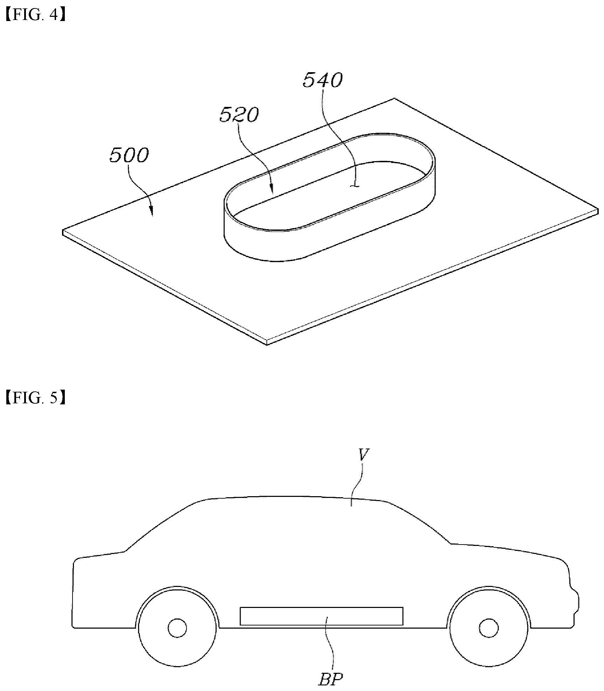

As illustrated in FIG. 4, the protruding portion 520 of the flame-retardant cover 500 is opened as the temporarily cut line 522 is cut by gas or flame generated in the event of thermal runaway in a particular battery module or battery cell 700, such that a through-hole 540 is formed. The through-hole 540 has a hole shape formed when an upper end portion of the protruding portion 520 of the flame-retardant cover 500 is cut along the temporarily cut line 522 when high-temperature flame or high-pressure gas is generated by thermal runaway. The gas or flame is discharged through the through-hole 540. Because the protruding portion 520 of the flame-retardant cover 500 forms the through-hole 540 in the event of thermal runaway, it is possible to prevent gas or flame from stagnating in the battery module casing 100 in which the plurality of battery cells 700 is stacked, thereby preventing or maximally delaying thermal propagation to the adjacent battery module or the adjacent battery cell 700.

As illustrated in FIG. 1, the cover frame 300 may be coupled to one opened side of the battery module casing 100 in which the plurality of battery cells 700 is embedded, and the cover frame 300 closes one side of the battery module casing 100. Therefore, the cover frame 300 may be made of the same metallic material as the battery module casing 100. In addition, because the battery module casing 100 is installed in the vehicle V by being embedded in the battery pack BP, the battery module casing 100 may be made of aluminum, which is easy to process and has excellent durability among metal materials, in order to prepare for an impact from the outside or an abnormal situation in the battery. Therefore, the cover frame 300 may be made of a metallic material. Among other things, the cover frame 300 may be made of aluminum that is advantageous in coping with an abnormal battery situation.

Meanwhile, the flame-retardant cover 500, which is coupled to one surface of the cover frame 300 to constitute the cover assembly for a battery module, is configured to prevent the cover frame 300, which is made of a metallic material such as aluminum, from being melted or collapsed in the event of thermal runaway in a particular battery module or battery cell 700. Therefore, the flame-retardant cover 500 needs to prevent the cover frame 300 from being exposed to gas or flame generated by thermal runaway. Therefore, as illustrated in FIG. 2, the flame-retardant cover 500 is manufactured so that a rim thereof is bent to surround a lateral surface of the cover frame 300 to prevent the lateral surface of the cover frame 300 from being exposed to gas or flame generated by thermal runaway.

The plurality of venting holes 320 is formed in the cover frame 300 and spaced apart from one another, and the protruding portions 520 of the flame-retardant cover 500 are respectively inserted and coupled into the venting holes 320. In case that the protruding portion 520 of the flame-retardant cover 500 is formed to be higher than a depth of the venting hole 320, the module cover 200 may separate during a process of assembling the module cover 200 coupled to the other surface of the cover frame 300, which may degrade assembling stability of the entire cover assembly for a battery module. Therefore, a height of the protruding portion 520 of the flame-retardant cover 500 may be designed to correspond to a height of the cover frame 300, as illustrated in FIG. 2. In this case, because the height of the cover frame 300 is equal to the depth of the venting hole 320 at a point at which the venting hole 320 is formed, the protruding portion 520 of the flame-retardant cover 500 may be inserted, in an intact manner, into a position at which the venting hole 320 is formed, such that the protruding portion 520 of the flame-retardant cover 500 closes the position of the venting hole 320 of the cover frame 300.

Because the protruding portion 520 of the flame-retardant cover 500 is inserted into the venting hole 320 of the cover frame 300, a lateral surface of the protruding portion 520 of the flame-retardant cover 500 is tightly attached to an inner peripheral surface of the venting hole 320 of the cover frame 300, as illustrated in FIG. 2. If the protruding portion 520 of the flame-retardant cover 500 is inserted into the position, at which the venting hole 320 of the cover frame 300 is positioned, without being tightly attached to the venting hole 320, the flame-retardant cover 500 is not fixed even though the cover frame 300 and the flame-retardant cover 500 are coupled, and the flame-retardant cover 500 may be easily separated by an external impact or thermal runaway in the battery module or the like. In case that the flame-retardant cover 500 is easily separated from the cover frame 300, the cover frame 300 is easily exposed to gas or flame in the event of a fire in the battery module or the battery cell 700, which may cause a risk that the structure of the cover frame 300 is melted or collapsed. It is important that the protruding portion 520 of the flame-retardant cover 500 is accurately inserted into and tightly attached to the venting hole 320 of the cover frame 300.

Likewise, in case that the protruding portion 520 of the flame-retardant cover 500 is inserted into the venting hole 320 of the cover frame 300, an upper-end surface of the protruding portion 520 of the flame-retardant cover 500 may be disposed on the same plane as an upper-end surface of the cover frame 300 in the state in which the flame-retardant cover 500 is coupled to the cover frame 300, as illustrated in FIG. 2. As described above, the height of the protruding portion 520 of the flame-retardant cover 500 corresponds to the height of the cover frame 300, and the height of the cover frame 300 is equal to the depth of the venting hole 320. Therefore, the height of the protruding portion 520 of the flame-retardant cover 500 is designed to be equal to the depth of the venting hole 320, such that in case that the flame-retardant cover 500 and the cover frame 300 are coupled by inserting the protruding portions 520 into the venting holes 320, the venting holes 320 of the cover frame 300 are closed, the flame-retardant cover 500 is disposed on the same plane as the upper surface of the cover frame 300.

As described above, the venting holes 320 of the cover frame 300 and the protruding portions 520 of the flame-retardant cover 500 are designed, and the cover frame 300 and the flame-retardant cover 500 are coupled, such that assembling stability of the cover assembly for a battery module may be improved. Further, the cover frame 300, which is made of a metallic material, is protected by the flame-retardant cover 500 even in the event of thermal runaway in the battery module or the battery cell 700, such that it is possible to prevent a risk that a part or the entirety of the cover frame 300 is melted or collapsed. Because the structural collapse of the cover frame 300 is prevented as described above, gas or flame is smoothly vented through the cover assembly for a battery module even in the event of thermal runaway in the battery module or the battery cell 700, and thermal propagation of gas or flame to the adjacent battery module or the adjacent battery cell 700 may be prevented or maximally delayed.

As illustrated in FIG. 1, in addition to the cover frame 300 and the flame-retardant cover 500, the cover assembly for a battery module of the present disclosure may further include the module cover 200 coupled to an outer side of the cover frame 300 to cover the entire cover assembly for a battery module, the module cover 200 being coupled to one opened side of the battery module casing 100 to close the battery module casing 100. The module cover 200 may be coupled to the side opposite to one side of the cover frame 300 to which the flame-retardant cover 500 is coupled. The module cover 200 may be made of a metallic material and formed as a cover with a shape for surrounding the lateral surface of the battery module casing 100. The module cover 200 may be made of the same material as the cover frame 300 and the battery module casing 100 among the metallic materials. The module cover 200 may be made of aluminum that has excellent durability and is easily deformed.

As illustrated in FIG. 1, the module cover 200 is coupled to the outer side of the cover frame 300 and constitutes the cover assembly for a battery module together with the flame-retardant cover 500 and the cover frame 300, fractured portions 220 need to be formed to discharge gas or flame generated in the event of thermal runaway in a particular battery module or battery cell 700. The fractured portion 220 is provided in the form of a temporarily cut hole. In case that gas or flame generated in the event of thermal runaway is discharged, the fractured portion 220 is cut and opened, such that gas or flame may be smoothly discharged from the battery module or the battery cell 700, in which thermal runaway occurs, and propagation of gas or flame to the adjacent battery module or the adjacent battery cell 700 may be prevented.

With reference to FIG. 2, because the fractured portions 220 of the module cover 200 serve as passageways through which gas or flame is discharged in the event of thermal runaway in the battery module or the battery cell 700, the fractured portions 220 may be formed at positions corresponding to the protruding portions 520 of the flame-retardant cover 500 and the venting holes 320 of the cover frame 300. In case that the fractured portion 220 of the module cover 200 is formed at a position different from the position of the protruding portion 520 of the flame-retardant cover 500 and the position of the venting hole 320 of the cover frame 300, gas or flame, which is generated in the event of thermal runaway, may pass through the protruding portions 520 of the flame-retardant cover 500 and the venting holes 320 of the cover frame 300 but sometimes cannot pass through the fractured portions 220 of the module cover 200, which may cause a situation in which the gas or flame stagnates between the module cover 200 and the cover frame 300. In this situation, the temperature and pressure in the battery rapidly increase, which may cause dangerous secondary damage. Therefore, the protruding portions 520 of the flame-retardant cover 500 and the venting holes 320 of the cover frame 300 are formed at the positions corresponding to the fractured portions 220 of the module cover 200, such that gas or flame is smoothly vented in the event of thermal runaway in the battery module or the battery cell 700, thereby assisting in improving overall safety of the battery including the battery module and the battery cells 700.

As illustrated in FIG. 1, the module cover 200 is coupled to the side opposite to the surface of the cover frame 300 to which the flame-retardant cover 500 is coupled, and one surface of the cover frame 300 is coupled to an inner surface of the module cover 200. In addition, the protruding portions 520 of the flame-retardant cover 500 are inserted and coupled into the venting holes 320 of the cover frame 300. In order to increase a coupling force between the cover frame 300 and the flame-retardant cover 500, the flame-retardant cover 500 may be designed such that the upper-end surface of the protruding portion 520 of the flame-retardant cover 500 is disposed on the same plane as the upper surface of the cover frame 300 in the state in which the cover frame 300 is coupled, as illustrated in FIG. 2.

In this case, as illustrated in FIG. 2, because the cover frame 300 is coupled to the inner surface of the module cover 200, the upper-end surface of the protruding portion 520 of the flame-retardant cover 500 is eventually in contact with the inner surface of the module cover 200, i.e., a surface directed toward the battery cell 700 of the module cover 200 in the state in which the flame-retardant cover 500 is coupled to the cover frame 300. With this design, the assembling stability between the module cover 200, the cover frame 300, and the flame-retardant cover 500 may be improved, and the flame-retardant cover 500 may be more securely coupled to the cover frame 300, such that it is possible to prevent a risk that the cover frame 300 is melted or the structure collapses under a high-temperature or high-pressure environment created in the event of thermal runaway.

The thermal runaway occurs mainly in the battery cell 700, the gas or flame successively propagates to the adjacent battery cell 700, and the fire spreads to the entire battery module. Therefore, there is a need to prevent the thermal propagation to the adjacent battery cell 700 by smoothly discharging gas or flame from the battery cell 700 in the event of thermal runaway in the battery cell 700. Therefore, in order to smoothly vent gas or flame in the event of thermal runaway in the battery cell 700, as illustrated in FIG. 2, the venting holes 320 of the cover frame 300 need to be positioned above the battery cells 700 and disposed to at least partially overlap upper ends of the battery cells 700.

In case that the venting hole 320 is disposed so as not to overlap the upper end of the battery cell 700, gas or flame, which is generated in the event of thermal runaway, cannot be smoothly discharged from the battery cell 700 disposed at the position that does not overlap the venting hole 320. For this reason, the gas or flame may easily propagate to the adjacent battery cell 700, which may cause a fire of the entire battery. Therefore, as illustrated in FIG. 2, the venting holes 320 of the cover frame 300, the protruding portions 520 of the flame-retardant cover 500, which are formed at the positions overlapping the venting holes 320, and the fractured portions 220 of the module cover 200 are disposed to at least partially overlap the upper ends of the battery cells 700, such that gas or flame needs to be smoothly vented in the event of thermal runaway in the corresponding battery cell 700.

Meanwhile, the adjacent battery cells 700 include a pair of battery cells 700, and a compression pad 900 is disposed between the pair of battery cells 700, as illustrated in FIG. 2. The compression pad 900 is a pad configured to serve to protect the battery cell 700 from an external impact and prevent a risk of a fire caused by friction or the like between the battery cells 700, and the compression pad 900 is disposed between the pair of adjacent battery cells 700.

In case that the compression pad 900 is formed between the pair of adjacent battery cells 700, as illustrated in FIG. 2, the protruding portions 520 of the flame-retardant cover 500 may be disposed to at least partially overlap the upper ends of the pair of battery cells 700 based on a direction toward the compression pad 900. In case that the protruding portions 520 or the venting holes 320 are formed above the upper ends of all the battery cells 700 stacked in the battery module casing 100, there occurs a problem in that the durability of the flame-retardant cover 500 or the cover frame 300 deteriorates. On the contrary, in case that the flame-retardant cover 500 or the cover frame 300 insufficiently has the protruding portions 520 or the venting holes 320, gas or flame, which is generated in the event of thermal runaway in the battery cell 700, are not smoothly discharged, which causes a problem in that thermal propagation to the adjacent battery cell 700 easily occurs.

Therefore, according to the present disclosure, as illustrated in FIG. 2, the venting holes 320 or the protruding portions 520 are formed above the upper ends of the pair of battery cells 700 based on the compression pads 900, and the upper ends of the pair of adjacent battery cells 700 based on the direction toward the compression pad 900 at least partially overlap the venting holes 320 or the protruding portions 520, such that the durability of the flame-retardant cover 500 or the cover frame 300 may be stably ensured, and the discharge of gas or flame, which is generated in the event of thermal runaway, may be smoothly guided.

Meanwhile, as illustrated in FIG. 5, the cover assembly for a battery module according to the present disclosure may be applied to the battery packs BP of various vehicles V such as internal combustion engine vehicles, electric vehicles, hybrid vehicles, and fuel cell electric vehicles. In addition to the vehicle V, the cover assembly for a battery module may be applied to the battery packs BP in various fields, such as industrial energy storage systems (ESSs) or household ESSs, and small-scale battery packs.

While the specific embodiments of the present disclosure have been illustrated and described, it will be obvious to those skilled in the art that the present disclosure may be variously modified and changed without departing from the technical spirit of the present disclosure defined in the appended claims.

## Claims

1. A cover assembly for a battery module, the cover assembly comprising:
a cover frame coupled to one opened side of a battery module casing in which a plurality of battery cells is embedded, the cover frame being configured to close the battery module casing and having a plurality of venting holes; and
a flame-retardant cover disposed between the cover frame and the battery cells, coupled to one surface of the cover frame, and having a plurality of protruding portions inserted into the venting holes of the cover frame.

2. The cover assembly of claim 1, wherein the protruding portion of the flame-retardant cover is formed at a position corresponding to the venting hole of the cover frame and
wherein the protruding portion of the flame-retardant cover is equal in size to or smaller in size than the venting hole of the cover frame, such that the protruding portion is inserted into the venting hole.

3. The cover assembly of claim 1, wherein the flame-retardant cover is formed by coupling a woven fabric and a flame retardancy material.

4. The cover assembly of claim 1, wherein a temporarily cut line is formed on the protruding portion of the flame-retardant cover along a shape of the venting hole of the cover frame and
wherein the protruding portion of the flame-retardant cover is opened as the temporarily cut line is cut when gas or flame occurs in a battery module, such that a through-hole is formed.

5. The cover assembly of claim 1, wherein the cover frame is made of a metallic material.

6. The cover assembly of claim 1, wherein a rim of the flame-retardant cover is bent to surround a lateral surface of the cover frame.

7. The cover assembly of claim 1, wherein a height of the protruding portion of the flame-retardant cover corresponds to a height of the cover frame,
wherein a lateral surface of the protruding portion of the flame-retardant cover is tightly attached to an inner peripheral surface of the venting hole of the cover frame and
wherein an upper-end surface of the protruding portion of the flame-retardant cover is disposed on the same plane as an upper surface of the cover frame in a state in which the flame-retardant cover is coupled to the cover frame.

8. The cover assembly of claim 1, further comprising:
a module cover configured to close one opened side of the battery module casing and cover the cover assembly.

9. The cover assembly of claim 8, wherein the module cover is made of a metallic material.

10. The cover assembly of claim 8, wherein the module cover has a fractured portion, and the protruding portion of the flame-retardant cover and the venting hole of the cover frame are formed at positions corresponding to the fractured portion of the module cover.

11. The cover assembly of claim 8, wherein an upper-end surface of the protruding portion of the flame-retardant cover is in contact with a surface of the module cover directed toward the battery cell in a state in which the flame-retardant cover is coupled to the cover frame.

12. The cover assembly of claim 1, wherein the venting hole is positioned above the battery cell and disposed to at least partially overlap an upper end of the battery cell.

13. The cover assembly of claim 1, wherein the adjacent battery cells include a pair of battery cells, a compression pad is disposed between the pair of battery cells, and the protruding portion of the flame-retardant cover is disposed to at least partially overlap upper ends of the pair of battery cells based on a direction toward the compression pad.

14. A battery pack comprising the cover assembly for a battery module of claim 1.

15. A vehicle comprising the battery pack of claim 14.
